# EUROPEAN PATENT APPLICATION

(11) **EP 3 282 738 A1**
(43) Date of publication of application: **14.02.2018**
(21) Application number: 16306044.5
(22) Date of filing: 11.08.2016
(51) Int. Cl.: H04W 12/08, H04L 9/32

(54) **METHOD FOR BINDING A TERMINAL APPLICATION TO A SECURITY ELEMENT AND CORRESPONDING SECURITY ELEMENT, TERMINAL APPLICATION AND SERVER**

(71) Applicant: GEMALTO SA, 92190 Meudon (FR)
(72) Inventor: FOKLE, Milas, 13881 GEMENOS cedex (FR)

(57) **Abstract**

The invention proposes a method for checking at the level of a service provider (30) if a terminal application (12) comprised in a terminal (10) is entitled to request for a service provided by the service provider (30), a security element (11) cooperating with the terminal (10), the security element (11) containing a first key generated by the terminal application (12) during an enrolment phase, wherein the method comprises:
A- Sending, from the service provider (30) to the security element (11), a first message [[[Nonce4MobileApp]Pubkey4app] II Nonce4SIM]Pubkey4SIM, where:
- Nonce4MobileApp and Nonce4SIM are data generated by the service provider (30);
- Pubkey4app and Pubkey4SIM are respectively the public keys of the terminal application (12) and of the security element (11);

B- Decrypting the first message in the security element (11) with the private key of the security element (11);
C- Sending from the security element (11) to the terminal application (12) the decrypted first message encrypted by the first key;
D- Decrypting in the terminal application (12) the received message with a second key and decrypting the Nonce4MobileApp with the private key of the terminal application (12);
E- Sending from the terminal application (12) to the service provider (30) the data Nonce4MobileApp and the Nonce4SIM;
F- Checking by the service provider (30) that the received data Nonce4MobileApp and Nonce4SIM correspond to those sent at step -A- and,
- if the data correspond, consider that the service provider (30) can trust the terminal application (12) and authorize the service to be executed;
- if the data do not correspond, consider that the service provider (30) cannot trust the terminal application (12) and forbid the service to be executed.

## Description

The field of the invention is of telecommunications. More precisely, the invention concerns a method for binding a terminal application to a security element, a corresponding security element, a corresponding terminal application and a corresponding server.

Telecommunication terminals (like for example mobile phones, PDAs, smartphones,...) typically cooperate with security elements like SIM cards, UICCs or eUICCs (embedded UICCs soldered in the terminals). These security elements allow communication networks (GSM, UMTS, LTE,...) to authenticate a subscriber (the owner of the terminal). A security element is traditionally included in the telecommunication terminal but it can also communicate wirelessly with the terminal, for example when included in a watch or jewellery.

A telecommunication terminal also contains applications, natively installed or downloaded by the user of the terminal.

In the scope of the present invention, a user needs to bind an application (hereinafter called terminal application) to his security element, in order to make the application strongly dependent from the security element. The terminal application has for example been downloaded by the user from a distant server, typically a server of a service provider (like for example Google™, Apple Store™, a bank,...) or has been installed in the terminal by the manufacturer of this terminal. The terminal application is installed in the terminal and not in the security element. The binding of a terminal application to a security element protects the terminal application against cloning (the terminal application will only work with a given single security element - replacing the security element by another one will render the terminal application inoperative) and provides a solution to obtain a secured channel between the terminal application and the security element.

Another problem is that the terminal application has to communicate with a distant server (the server of a service provider) and this server does not know if the terminal application can be trusted. A malware installed in the terminal could intercept the communication between the terminal application and the server and root them to a fake application (or a clone) present on another terminal.

To this purpose, the invention proposes a two steps method:
- A single enrolment phase which purpose is to create a key shared between the terminal application and the security element;
- A runtime phase which purpose is to verify at the level of a service provider, when the user wants to run the terminal application, that the terminal application is bound to the security element.

More precisely, the invention proposes a method for checking at the level of a service provider if a terminal application comprised in a terminal is entitled to request for a service provided by the service provider, a security element cooperating with the terminal, the security element containing a first key generated by the terminal application during an enrolment phase, wherein the method comprises:
A- Sending, from the service provider to the security element, a first message [[[Nonce4MobileApp]Pubkey4app] II Nonce4SIM]Pubkey4SIM, where:
   - Nonce4MobileApp and Nonce4SIM are data generated by the service provider;
   - Pubkey4app and Pubkey4SIM are respectively the public keys of the terminal application and of the security element;
B- Decrypting the first message in the security element with the private key of the security element;
C- Sending from the security element to the terminal application the decrypted first message encrypted by the first key;
D- Decrypting in the terminal application the received message with a second key and decrypting the Nonce4MobileApp with the private key of the terminal application;
E- Sending from the terminal application to the service provider the data Nonce4MobileApp and the Nonce4SIM;
F- Checking by the service provider that the received data Nonce4MobileApp and Nonce4SIM correspond to those sent at step -A- and,
   - if the data correspond, consider that the service provider can trust the terminal application and authorize the service to be executed;
   - if the data do not correspond, consider that the service provider cannot trust the terminal application and forbid the service to be executed.

Preferably, the first key is function of a masterkey and a PIN code entered by the user of the terminal.

Advantageously, the first key is sent to the security element by the terminal application through an external server.

Preferably, the security element, after having received the first key, sends a challenge to the terminal application, the terminal application encrypts the challenge's response with the first key and sends the encrypted response to the security element, the security element decrypts the received encrypted response and stores the first key if the response matches what's expected by the security element.

The invention also concerns a security element cooperating with a terminal, the security element containing a first key generated by a terminal application comprised in the terminal, the security element comprising a microprocessor storing instructions dedicated to:
A- Receive, from a service provider, a first message [[[Nonce4MobileApp]Pubkey4app] II Nonce4SIM]Pubkey4SIM, where:
   - Nonce4MobileApp and Nonce4SIM are data generated by the service provider;
   - Pubkey4app and Pubkey4SIM are respectively the public keys of the terminal application and of the security element;
B- Decrypt the first message with the private key of the security element;
C- Send to the terminal application the decrypted first message encrypted by the first key.

Preferably, the first key is function of a masterkey and a PIN code entered by the user of the terminal.

Preferably, the first key is sent to the security element by the terminal application through an external server.

Preferably, the security element, after having received the first key, sends a challenge to the terminal application, the terminal application decrypts the challenge and encrypt the response with first key and sends the encrypted response to the security element, the security element decrypts the received encrypted response and stores the first key if the response is what is expected by the security element.

The invention also concerns a server of a service provider able to check if a terminal application comprised in a terminal is entitled to request for a service provided by the service provider, a security element cooperating with the terminal, the security element containing a first key generated by the terminal application during an enrolment phase, the server comprising one or more microprocessors for:
A- Sending, from the service provider to the security element, a first message [[[Nonce4MobileApp]Pubkey4app] II Nonce4SIM]Pubkey4SIM, where:
   - Nonce4MobileApp and Nonce4SIM are data generated by the service provider;
   - Pubkey4app and Pubkey4SIM are respectively the public keys of the terminal application and of the security element;
B- Receiving from the terminal application the data Nonce4MobileApp and the Nonce4SIM;
C- Checking that the received data Nonce4MobileApp and Nonce4SIM correspond to those sent at step -A- and,
   - if the data correspond, consider that the service provider can trust the terminal application and authorize the service to be executed;
   - if the data do not correspond, consider that the service provider cannot trust the terminal application and forbid the service to be executed.

Finally, the invention concerns a terminal application comprised in a terminal, the terminal cooperating with a security element, the security element containing a first key generated by the terminal application during an enrolment phase, the terminal application being configured to:
A- Receive from the security element, a first message [[[Nonce4MobileApp]Pubkey4app] II Nonce4SIM]PSK-SIM-App, where:
   - Nonce4MobileApp and Nonce4SIM are data generated by a service provider;
   - Pubkey4app and Pubkey4SIM are respectively the public keys of the terminal application and of the security element;
   - PSK-SIM-App is the first key;
B- Decrypt the first message which contains Nonce4SIM with a second key and decrypt the data Nonce4MobileApp with the private key of the terminal application;
C- Send to the service provider the data Nonce4MobileApp and the Nonce4SIM or a function thereof.

Preferably, the first key is function of a masterkey and a PIN code entered by the user of the terminal.

Preferably, the first key is sent by the terminal application to the security element through an external server.

Preferably, the terminal application is configured to:
- receive a challenge from the security element;
- encrypt a response with the first key;
- send the encrypted response to the security element.

The invention will be better understood thanks to the following description of the figures that represent:
- Figure 1 the enrolment phase;
- Figure 2 the runtime phase.

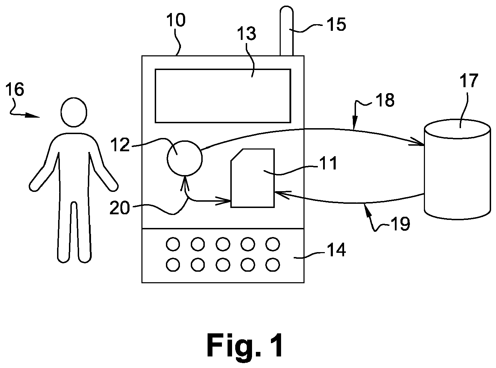

Figure 1 represents the enrolment phase. It consists in creating a key shared between the terminal application and the security element.

In this figure, a terminal 10, for example a smartphone, cooperates with a security element 11 and contains a terminal application 12. A screen 13, a keypad 14, an antenna 15 and a user 16 of the terminal 10 are also represented.

The first step of the enrolment phase consists in defining an application PIN code. This PIN code is chosen by the user 16, for example the four digits 1234 (entered with the keypad 14). The terminal application 12 uses this PIN code to generate a shared key called PSK-SIM-App (hereinafter also called first key). This shared key is generated thanks to a Masterkey stored in the terminal application:
PSK-SIM-App = f(Masterkey, PIN code) with f a function.

The Masterkey is dependent on the terminal application. A given terminal application can have a single Masterkey (the terminal application installed in different terminals will have the same Masterkey). But in order to improve the security, each installed terminal application can have a different Masterkey (the Masterkeys of a same terminal application installed in different terminals are different (diversified)).

The second step of the enrolment phase consists in sending the first key PSK-SIM-App from the terminal application to the security element. Since no binding between the terminal application and the security element is for the moment established, the link between the terminal application and the security element is not secured. Therefore, the terminal application sends the PSK-SIM-App to the security element through a secured OTA (Over The Air) channel: PSK-SIM-App is sent to an external server 17 (step 18), for example by SMS or on a http channel. The external server sends the received PSK-SIM-App to the security element at step 19 (also on a secured link).

The third step of the enrolment phase consists in sending from the security element 11 to the terminal application 12 a challenge in order to validate the enrolment phase. This can be done internally in the terminal 10 (link 20). The challenge is encrypted by the terminal application thanks to the PSK-SIM-App and returned to the security element.

The fourth step of the enrolment phase consists in checking at the level of the security element 11, thanks to the PSK-SIM-App received during step 19, that the response of the terminal application is correct. If the right response has been returned by the terminal application, the first key PSK-SIM-App is stored in the security element and the enrolment phase is finished (the security element has recognized the terminal application that has generated the first key). Otherwise, the enrolment phase is aborted.

It has to be noted that once the PSK-SIM-App is stored in the security element, it is deleted in the terminal application (the terminal application doesn't store the first key PSK-SIM-App anymore).

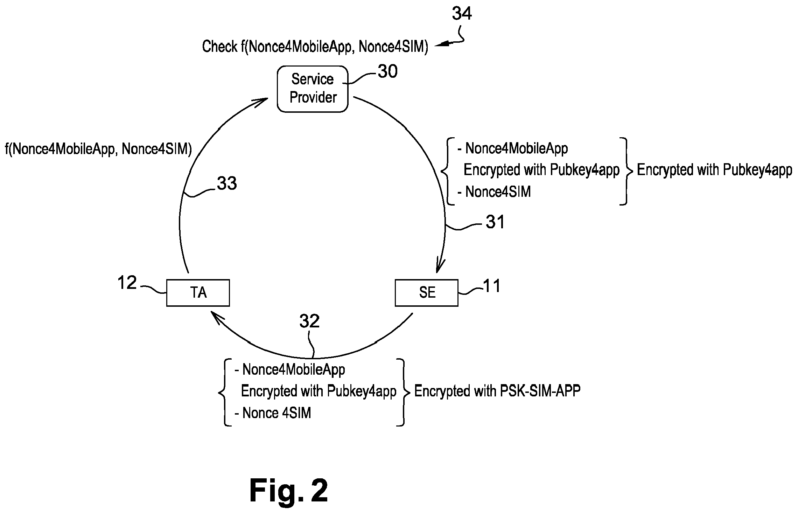

Figure 2 represents the runtime phase.

This phase occurs when the user 16 tries to request for a service provided by a service provider 30 by using the terminal application 12. This service provider 30 wants to be confident that the terminal application 12 is bound to the security element 11. In order to check if the terminal application 12 is entitled to request for a service provided by this service provider 30, the service provider 30 (thanks to a server) sends (step 31) to the security element 11 a first message:
[[[Nonce4MobileApp]Pubkey4app] II Nonce4SIM]Pubkey4SIM
where:
- Nonce4MobileApp and Nonce4SIM are data (random) generated by the service provider 30;
- Pubkey4app and Pubkey4SIM are respectively the public keys of the terminal application 12 and of the security element 11.

This first message can for example be sent in a SMS responding to the GSM standard 03.40. By receiving this first message, the security element 11 decrypts it with its private key and recovers:
[[[Nonce4MobileApp]Pubkey4app] II Nonce4SIM]

The security element 11 then transmits (step 32) to the terminal application 12 the decrypted first message encrypted by the first key PSK-SIM-App that it has stored, i.e.:
[[[Nonce4MobileApp]Pubkey4app] II Nonce4SIM]PSK-SIM-App

The transmission of this message is done under the OMAPI specification.

The terminal application 12 decrypts the received message with a second key and decrypts the Nonce4MobileApp with its private key.

The second key is the same as the first key (PSK-SIM-App) if the user has entered his PIN code correctly. Otherwise, two solutions are possible:
- The SE 11 and the terminal application 12 are not bound;
- The user has entered a wrong PIN code.

Thus, the terminal application 12 recovers:
- Nonce4MobileApp
- Nonce4SIM

The terminal application 12 then sends (step 33 can be realized by Wifi, 3G, 4G, TLS, https...) to the service provider 30 the data Nonce4MobileApp and Nonce4SIM and the service provider 30 checks if the received data Nonce4MobileApp and Nonce4SIM correspond to those sent at step 31.

In the figure, f(Nonce4MobileApp, Nonce4SIM) is sent to the service provider 30. Function f can be a hash or a XOR of Nonce4MobileApp and Nonce4SIM but Nonce4MobileApp and
Nonce4SIM can also be sent in clear to the service provider 30 (linear function of coefficient 1 : f(x) = x).

If the data correspond, the service provider 30 considers that it can trust the terminal application 12 and authorize the service to be executed. Otherwise, if the data do not correspond, the service provider 30 considers that it cannot trust the terminal application 12 and forbids the service to be executed.

Thus the invention proposes a trust delegation: If the data correspond, it means that the security element has trust in the terminal application (they are bound) and that the service provider can trust the terminal application.

The invention also concerns a security element 11 cooperating with a terminal 10, this security element 11 containing a first key generated by the terminal application 12 comprised in the terminal, the security element 11 comprising a microprocessor storing instructions dedicated to:
A- Receive, from a service provider 30, the first message:
   [[[Nonce4MobileApp]Pubkey4app] II Nonce4SIM]Pubkey4SIM
B- Decrypt the first message with the private key of the security element 11;
C- Send to the terminal application 12 the decrypted first message encrypted by the first key.

The invention also concerns a server of a service provider 30 able to check if a terminal application 12 comprised in a terminal 10 is entitled to request for a service provided by the service provider 30, a security element 11 cooperating with the terminal 10, the security element 11 containing a first key generated by the terminal application 12 during an enrolment phase, the server comprising one or more microprocessors for:
A- Sending, from the service provider to the security element 11, the first message:
   [[[Nonce4MobileApp]Pubkey4app] II Nonce4SIM]Pubkey4SIM
B- Receiving from the terminal application 12 the data Nonce4MobileApp and the Nonce4SIM;
C- Checking that the received data Nonce4MobileApp and Nonce4SIM correspond to those sent at step -A- and,
   - if the data correspond, consider that the service provider can trust the terminal application 12 and authorize the service to be executed;
   - if the data do not correspond, consider that the service provider cannot trust the terminal application 12 and forbid the service to be executed.

Finally, the invention also concerns a terminal application 12 comprised in a terminal 10, the terminal 10 cooperating with a security element 11, the security element 11 containing a first key generated by the terminal application 12 during an enrolment phase, the terminal application 12 being configured to:
A- Receive from the security element 11, the first message:
   [[[Nonce4MobileApp]Pubkey4app] II Nonce4SIM]PSK-SIM-App
B- Decrypt this first message with a second key and decrypt the data Nonce4MobileApp with the private key of the terminal application 12; By decrypting the first message, it gets the Nonce4SIM ;
C- Send to the service provider the data f(Nonce4MobileApp, Nonce4SIM) where f is a function. F could be a hash function.

## Claims

1. Method for checking at the level of a service provider (30) if a terminal application (12) comprised in a terminal (10) is entitled to request for a service provided by said service provider (30), a security element (11) cooperating with said terminal (10), said security element (11) containing a first key generated by said terminal application (12) during an enrolment phase, wherein said method comprises:
A- Sending, from said service provider (30) to said security element (11), a first message [[[Nonce4MobileApp]Pubkey4app] II Nonce4SIM]Pubkey4SIM, where:
- Nonce4MobileApp and Nonce4SIM are data generated by said service provider (30);
- Pubkey4app and Pubkey4SIM are respectively the public keys of said terminal application (12) and of said security element (11);
B- Decrypting said first message in said security element (11) with the private key of said security element (11);
C- Sending from said security element (11) to said terminal application (12) said decrypted first message encrypted by said first key;
D- Decrypting in said terminal application (12) the received message with a second key and decrypting said Nonce4MobileApp with the private key of said terminal application (12);
E- Sending from said terminal application (12) to said service provider (30) said data Nonce4MobileApp and said Nonce4SIM;
F- Checking by said service provider (30) that the received data Nonce4MobileApp and Nonce4SIM correspond to those sent at step -A- and,
- if said data correspond, consider that said service provider (30) can trust said terminal application (12) and authorize said service to be executed;
- if said data do not correspond, consider that said service provider (30) cannot trust said terminal application (12) and forbid said service to be executed.

2. Method according to claim 1, wherein said first key is function of a masterkey and a PIN code entered by the user of said terminal (10).

3. Method according to any of the claims 1 and 2, wherein said first key is sent to said security element (11) by said terminal application (12) through an external server.

4. Method according to claim 3, wherein said security element (11), after having received said first key, sends a challenge to said terminal application (12), said terminal application (12) encrypts said challenge's response with said first key and sends the encrypted response to said security element (11), said security element (11) decrypts the received encrypted response and stores said first key if the decrypted response matches what's expected by said security element (11).

5. Security element (11) cooperating with a terminal (10), said security element (11) containing a first key generated by a terminal application (12) comprised in said terminal (10), said security element (11) comprising a microprocessor storing instructions dedicated to:
A- Receive, from a service provider (30), a first message [[[Nonce4MobileApp]Pubkey4app] II Nonce4SIM]Pubkey4SIM, where:
- Nonce4MobileApp and Nonce4SIM are data generated by said service provider (30);
- Pubkey4app and Pubkey4SIM are respectively the public keys of said terminal application (12) and of said security element (11);
B- Decrypt said first message with the private key of said security element (11);
C- Send to said terminal application (12) said decrypted first message encrypted by said first key.

6. Security element (11) according to claim 5, wherein said first key is function of a masterkey and a PIN code entered by the user of said terminal (10).

7. Security element (11) according to any of the claims 5 and 6, wherein said first key is sent to said security element (11) by said terminal application (12) through an external server.

8. Security element (11) according to claim 7, wherein said security element (11), after having received said first key, sends a challenge to said terminal application (12), said terminal application (12) decrypts the challenge and encrypt the response with first key and sends the encrypted response to said security element (11), said security element (11) decrypts the received encrypted response and stores said first key if the response is what is expected by said security element (11).

9. Server of a service provider (30) able to check if a terminal application (12) comprised in a terminal (10) is entitled to request for a service provided by said service provider (30), a security element (11) cooperating with said terminal (10), said security element (11) containing a first key generated by said terminal application (12) during an enrolment phase, said server comprising one or more microprocessors for:
A- Sending, from said service provider (30) to said security element (11), a first message [[[Nonce4MobileApp]Pubkey4app] II Nonce4SIM]Pubkey4SIM, where:
- Nonce4MobileApp and Nonce4SIM are data generated by said service provider (30);
- Pubkey4app and Pubkey4SIM are respectively the public keys of said terminal application (12) and of said security element (11);
B- Receiving from said terminal application (12) said data Nonce4MobileApp and said Nonce4SIM;
C- Checking that the received data Nonce4MobileApp and Nonce4SIM correspond to those sent at step -A- and,
- if said data correspond, consider that said service provider (30) can trust said terminal application (12) and authorize said service to be executed;
- if said data do not correspond, consider that said service provider (30) cannot trust said terminal application (12) and forbid said service to be executed.

10. Terminal application (12) comprised in a terminal (10), said terminal (10) cooperating with a security element (11), said security element (11) containing a first key generated by said terminal application (12) during an enrolment phase, said terminal application (12) being configured to:
A- Receive from said security element (11), a first message [[[Nonce4MobileApp]Pubkey4app] II Nonce4SIM]PSK-SIM-App, where:
- Nonce4MobileApp and Nonce4SIM are data generated by a service provider (30);
- Pubkey4app and Pubkey4SIM are respectively the public keys of said terminal application (12) and of said security element (11);
- PSK-SIM-App is said first key;
B- Decrypt said first message which contains Nonce4SIM with a second key and decrypt said data Nonce4MobileApp with the private key of said terminal application (12);
C- Send to said service provider (30) said data Nonce4MobileApp and said Nonce4SIM or a function thereof.

11. Terminal application (12) according to claim 10, wherein said first key is function of a masterkey and a PIN code entered by the user of said terminal (10).

12. Terminal application (12) according to any of the claims 10 and 11, wherein said first key is sent by said terminal application (12) to said security element (11) through an external server.

13. Terminal application (12) according to claim 12, wherein it is configured to:
- receive a challenge from said security element (11);
- encrypt a response with said first key;
- send the encrypted response to said security element (11).
